# EUROPEAN PATENT APPLICATION

(11) **EP 4 628 544 A1**
(43) Date of publication of application: **08.10.2025**
(21) Application number: 23897595.7
(22) Date of filing: 21.11.2023
(51) Int. Cl.: C08L 81/02, B29C 48/00, C08K 7/02

(54) **RECYCLED POLYARYLENE SULFIDE RESIN COMPOSITION AND PRODUCTION METHOD THEREOF**

(30) Priority: 01.12.2022 JP 2022192698
(71) Applicant: Tosoh Corporation, Yamaguchi 746-8501 (JP)
(72) Inventor: INOUE, Hiroki, Yokkaichi-shi, Mie 510-8540 (JP)
(74) Representative: Vossius & Partner Patentanwälte Rechtsanwälte mbB
(86) International application number: PCT/JP2023/041709
(87) International publication number: WO 2024/116947

(57) **Abstract**

Provided are a fibrous filler-reinforced recycled polyarylene sulfide resin composition that contains a recycled polyarylene sulfide resin, without affecting the inherent heat resistance, chemical resistance and fluidity of a polyarylene sulfide resin, and a production method thereof.

The fibrous filler-reinforced recycled polyarylene sulfide resin composition contains a polyarylene sulfide resin (A), a recycled polyarylene sulfide resin (B) and a fibrous filler (C), the polyarylene sulfide resin (A) having a melt viscosity of 100 to 3000 poises, the amount of the recycled polyarylene sulfide resin (B) contained being 10 to 250 parts by weight per 100 parts by weight of the polyarylene sulfide resin (A), and the amount of the fibrous filler (C) contained being 10 to 60 parts by weight per 100 parts by weight in total of the polyarylene sulfide resin (A) and the recycled polyarylene sulfide resin (B).

## Description

### TECHNICAL FIELD

The present invention relates to a fibrous filler-reinforced recycled polyarylene sulfide resin composition containing a recycled polyarylene sulfide resin. In particular, the present invention relates to a fibrous filler-reinforced recycled polyarylene sulfide resin composition that maintains excellent properties such as mechanical properties and fluidity inherent in a polyarylene sulfide resin, even though containing a polyarylene sulfide resin recovered from polyarylene sulfide resin formed articles to be disposed of by incineration or landfill after market distribution or a polyarylene sulfide resin collected and recycled from polyarylene sulfide generated as sprues, runners, unnecessary formed article products and the like during production of polyarylene sulfide resin formed articles, and a production method thereof.

### BACKGROUND ART

Polyarylene sulfide (hereinafter abbreviated as PAS) resins typified by poly(p-phenylene sulfide) (hereinafter abbreviated as PPS) resins have excellent properties such as heat resistance, chemical resistance and fluidity, and are widely used in electrical and electronic components, automotive parts, office automation equipment parts and the like by taking advantage of their excellent properties.

On the other hand, there has recently been a growing demand, particularly in Western countries, to use recycled resins in electrical and electronic components for the purpose of reduction of plastic waste discharge. This trend is spreading to automotive parts and other products.

In general, recycled materials are roughly classified into post-consumer recycled materials (hereinafter abbreviated as PCR) and post-industrial recycled materials (hereinafter abbreviated as PIR). PCR materials refer to materials collected or recycled from products that have been used and disposed of by consumers, whereas PIR materials refer to materials collected or recycled from wastes generated during production processes before products reach consumers. Thus, recycled polyarylene sulfide resins obtained by recycling of formed articles etc. to be disposed of after market distribution correspond to PCR materials; and recycled polyarylene sulfide resins obtained by recycling of industrial wastes such as sprues, runners and unnecessary formed article products correspond to PIR materials.

As resin compositions containing recycled materials, there have been proposed: a recycled resin composition for use in e.g. filament materials for fused deposition modeling 3D printers, containing a recycled resin material (A) recycled from plastic packaging and including a polyolefin resin as a predominant component and an unmelted substance in which the percentage of particles with a maximum size of 200 µm or greater is 15% by number or less, and a resin (B) having a melt flow rate higher than or equal to 5 g/10 min as measured at a temperature of 230°C and a load of 2.16 kg (see, for example, Patent Document 1); and a polycarbonate resin composition containing (A) 40 to 80 mass% of a recycled aromatic polycarbonate resin and (B) 20 to 60 mass% of an aromatic polycarbonate resin and further containing, per 100 parts by mass in total of the resins (A) and (B), (C) 10 to 60 parts by mass of carbon fiber coated with a resin selected from polyamides, polyurethanes and epoxy resins, but not coated with nickel, (D) 10 to 20 parts by mass of a phosphate compound, (E) 0.01 to 1 part by mass of a fluorine compound, and (F) 0.5 to 10 parts by mass of a polyorganosiloxanecontaining graft copolymer, and being free from nickel-coated carbon fiber (see, for example, Patent Document 2).

Moreover, as a method for producing a formed product containing a recycled material, there has been proposed a method for producing a formed article, in which 20 to 80 wt% of recycled pellets of fibrous filler-reinforced crosslinked polyphenylene sulfide composition and 80 to 20 wt% of unrecycled pellets of fibrous filler-reinforced crosslinked polyphenylene sulfide composition are charged into and injection-molded by an injection molding machine (see, for example, Patent Document 3).

### PRIOR ART DOCUMENTS

### PATENT DOCUMENTS

Patent Document 1: JP-A-2021-115795
Patent Document 2: Japanese Patent No. 6825890
Patent Document 3: Japanese Patent No. 5386853

### DISCLOSURE OF INVENTION

### TECHNICAL PROBLEM

For the resin compositions of Patent Documents 1 and 2, however, no studies and proposals are made on not only polyarylene sulfide resins, which are highly difficult to handle and utilize, but also other super engineering plastics. Further, in the formed article production method of Patent Document 3, it is merely proposed to carry out injection molding of recycled pellets of fibrous filler-reinforced crosslinked polyphenylene sulfide composition, recycled from unnecessary products, and unrecycled pellets of fibrous filler-reinforced crosslinked polyphenylene sulfide composition by means of an injection molding machine; and the use of recycled resins is limited.

It is accordingly an object of the present invention to provide a fibrous filler-reinforced recycled PAS resin composition that contains a recycled PAS resin without affecting the inherent mechanical properties and fluidity of a PAS resin, and a production method thereof.

The reuse of recycled polyarylene sulfide resins and the improvement in efficiency of such reuse make contributions to the promotion of inclusive and sustainable industrialization and are one of technologies that contribute to sustainable societies, such as the SDGs, which have been called for in recent years.

### SOLUTION TO PROBLEM

As a result of extensive studies made on the above-mentioned object, the present inventors have found that a specific fibrous filler-reinforced recycled PAS resin composition containing a recycled PAS resin can achieve excellent mechanical properties and fluidity, and thus have accomplished the present invention.

That is, the present invention includes the following aspects [1] to [9].
[1] A fibrous filler-reinforced recycled polyarylene sulfide resin composition comprising a polyarylene sulfide resin (A), a recycled polyarylene sulfide resin (B) and a fibrous filler (C),
   the polyarylene sulfide resin (A) having a melt viscosity of 100 to 3000 poises as measured under the conditions of a measurement temperature of 315°C and a load of 10 kg by a capillary rheometer flow tester equipped with a die of 1 mm in diameter and 2 mm in length,
   the amount of the recycled polyarylene sulfide resin (B) contained being 10 to 250 parts by weight per 100 parts by weight of the polyarylene sulfide resin (A), and
   the amount of the fibrous filler (C) contained being 10 to 60 parts by weight per 100 parts by weight in total of the polyarylene sulfide resin (A) and the recycled polyarylene sulfide resin (B).
[2] The fibrous filler-reinforced recycled polyarylene sulfide resin composition according to [1], wherein the recycled polyarylene sulfide resin (B) is a post-consumer recycled polyarylene sulfide resin and/or a post-industrial recycled polyarylene sulfide resin.
[3] The fibrous filler-reinforced recycled polyarylene sulfide resin composition according to [1] or [2], wherein the recycled polyarylene sulfide resin (B) is a unreinforced recycled polyarylene sulfide resin.
[4] The fibrous filler-reinforced recycled polyarylene sulfide resin composition according to any one of [1] to [3], wherein the recycled polyarylene sulfide resin (B) is a unreinforced recycled polyarylene sulfide resin recycled from at least one type selected from the group consisting of polyarylene sulfide resin fibers, polyarylene sulfide resin sheets and polyarylene sulfide resin films.
[5] The fibrous filler-reinforced recycled polyarylene sulfide resin composition according to any one of [1] to [4], wherein the fibrous filler (C) is in the form of chopped strands having an average fiber diameter of 6 to 14 µm and/or chopped strands formed from flat glass fibers having a fiber cross-sectional aspect ratio of 2 to 4.
[6] The fibrous filler-reinforced recycled polyarylene sulfide resin composition according to any one of [1] to [5], further comprising a non-fibrous filler (D).
[7] The fibrous filler-reinforced recycled polyarylene sulfide resin composition according to any one of [1] to [6], further comprising a thermoplastic elastomer (E), a compatibilizer (F) and/or a release agent (G).
[8] A pellet formed from the fibrous filler-reinforced recycled polyarylene sulfide resin composition as defined in any one of [1] to [7], wherein the pellet has a columnar shape with a diameter of 0.5 to 2.5 mm and a length of 1.5 to 4 mm or a spherical shape with a diameter of 1 to 3 mm.
[9] A method for producing a fibrous filler-reinforced recycled polyarylene sulfide resin composition, comprising: melt-kneading in and extruding from, a twin-screw extruder having screws with a ratio (L1/D1) of screw length (L1) to screw diameter (D1) of 30 or greater and two or more kneading zones, a polyarylene sulfide resin (A), a recycled polyarylene sulfide resin (B) and a fibrous filler (C) under the kneading conditions of a kneading-zone cylinder temperature of 280 to 330°C, a screw peripheral speed of 50 to 400 mm/second and a dwell time of 30 to 100 seconds, the polyarylene sulfide resin (A) having a melt viscosity of 100 to 3000 poises as measured under the conditions of a measurement temperature of 315°C and a load of 10 kg by a capillary rheometer flow tester equipped with a die of 1 mm in diameter and 2 mm in length.

### ADVANTAGEOUS EFFECTS OF INVENTION

The present invention provides a fibrous filler-reinforced recycled PAS resin composition containing a recycled PAS resin. The thus-provided fibrous filler-reinforced recycled PAS resin composition is excellent in impact resistance and fluidity, and is therefore particularly useful for electrical and electronic components, automotive parts, water area applications or the like, and extremely high in industrial value.

### DESCRIPTION OF EMBODIMENTS

Hereinafter, the present invention will be described in detail below.

The PAS resin (A) in the fibrous filler-reinforced recycled PAS resin composition of the present invention can be any polymer that falls under the category commonly referred to as PAS resins. The PAS resin may be, for example, a homopolymer or copolymer formed by p-phenylene sulfide units, m-phenylene sulfide units, o-phenylene sulfide units, phenylene sulfide sulfone units, phenylene sulfide ketone units, phenylene sulfide ether units and/or biphenylene sulfide units. Specific examples of the PAS resin include PPS, polyphenylene sulfide sulfone, polyphenylene sulfide ketone and polyphenylene sulfide ether. Among others, PPS is preferred to obtain the fibrous filler-reinforced recycled PAS resin composition with particularly excellent heat resistance and strength properties.

The PAS resin (A) has a melt viscosity of 100 to 3000 poises as measured under the conditions of a measurement temperature of 315°C and a load of 10 kg by a capillary rheometer flow tester equipped with a die of 1 mm in diameter and 2 mm in length. When the melt viscosity is lower than 100 poises, the resulting composition is inferior in impact resistance. When the melt viscosity is higher than 3000 poises, the resulting composition is inferior in fluidity.

The PAS resin (A) can be produced by a known process for producing PAS resins, for example, by polymerizing an alkali metal sulfide and a polyhalogenated aromatic compound in a polar organic solvent. The polar organic solvent may, for example, be N-methyl-2-pyrrolidone, N-ethyl-2-pyrrolidone, cyclohexylpyrrolidone, dimethylformamide, dimethylacetamide or the like. The alkali metal sulfide may, for example, be an anhydride or hydrate of sodium sulfide, rubidium sulfide or lithium sulfide, and may be a reaction product of an alkali metal hydrogen sulfide and an alkali metal hydroxide. The polyhalogenated aromatic compound may, for example, be p-dichlorobenzene, p-dibromobenzene, p-diiodobenzene, m-dichlorobenzene, m-dibromobenzene, m-diiodobenzene, 4,4'-dichlorodiphenyl sulfone, 4,4'-dichlorobenzophenone, 4,4'-dichlorodiphenyl ether, 4,4'-dichlorobiphenyl or the like.

The polyarylene sulfide resin (A) may be one having a linear structure, one having a crosslinked or branched structure introduced by adding a small amount of a polyhalogenated compound with three or more halogen atoms during polymerization, one having a PAS molecular chain partially and/or terminally modified with a functional group such as a carboxyl group, a metal carboxylate, an amino group, an alkyl group, an alkoxy group or a nitro group, or one heat-treated in a nonoxidizing inert gas such as nitrogen, or may be a mixture of these structures. Further, the polyarylene sulfide resin (A) may be one in which impurities such as sodium atoms, PAS resin oligomers, sodium chloride and sodium salt of 4-(N-methyl-chlorophenylamino)butanoate have been reduced by deionization treatment (e.g. acid washing or hot-water washing) or washing treatment with an organic solvent such as acetone or methyl alcohol before or after thermal curing. The PAS resin (A) may be a cured polymer obtained by heat treatment in an inert gas or an oxidizing gas after polymerization

The recycled PAS resin (B) in the fibrous filler-reinforced recycled PAS resin composition can be any PAS resin recycled from formed articles etc. to be disposed of after market distribution or recycled from industrial wastes such as sprues, runners and unnecessary formed article products generated during injection molding etc. The recycled PAS resin (B) recycled from formed articles to be disposed of after market distribution, which corresponds to PCR, is excellent in sustainability from the viewpoint of reduced consumption of resources, and thus, the use of such a recycled resin is expected. The recycled PAS resin (B) recycled from sprues, runners or unnecessary formed article products, which corresponds to PIR, is less in quality variation in view of the fact that the PAS resin of the same structure, the same grade and possibly even the same lot can be recycled, and thus, the use of such a recycled resin leads to production of the fibrous filler-reinforced recycled PAS resin composition with less quality variation.

The recycled PAS resin (B) may be a fibrous filler-reinforced PAS resin composition containing an unreinforced recycled PAS resin and a fibrous filler, or the like. A fibrous filler-reinforced PAS resin composition is preferred to enable efficient production of the fibrous filler-reinforced recycled PAS resin composition of the present invention.

Here, the unreinforced recycled PAS resin refers to a recycled PAS resin mixed with no inorganic filler etc.

The recycled PAS resin (B) may be one recycled from commercially available PAS resins. Examples of the commercially available PAS resins include SUSTEEL (registered trademark) (manufactured by TOSOH CORPORATION), TORELINA (registered trademark) (manufactured by TORAY INDUSTRIES, INC.), FZ-1140 (trade name) (manufactured by DIC CORPORATION), DURAFIDE (registered trademark) (manufactured by Polyplastics Co., Ltd.), and the like. In the case where the recycled PAS resin (B) is a resin reinforced with a fibrous filler, the fibrous filler may, for example, be any selected from: glass fibers; carbon fibers such as PAN-based carbon fibers and pitch-based carbon fibers; graphitized fibers; whiskers such as silicon nitride whiskers, basic magnesium sulfate whiskers, barium titanate whiskers, potassium titanate whiskers, silicon carbide whiskers, boron whiskers and zinc oxide whiskers; metal fibers such as stainless steel fibers; inorganic fibers such as rockwool, zirconia, alumina silica, barium titanate, silicon carbide, alumina, silica and blast furnace slag; organic fibers such as wholly-aromatic polyamide fibers, phenolic resin fibers and wholly-aromatic polyester fibers; and mineral fibers such as wollastonite and magnesium oxysulfate.

In the case where an unreinforced recycled PAS resin is used as the recycled RAS resin (B), it is possible to not only suppress excessive breakage of the filler during recycling but also suppress degradation of the resin by heat generated due to the addition of the filler, whereby the recycled PAS resin shows excellent mechanical properties. The unreinforced recycled PAS resin may be any of those recycled from commercially available PAS resin fibers, PAS resin sheets, PAS resin films and products thereof. These reinforced recycled PAS resin can be used alone or in combination of two or more thereof.

The amount of the recycled PAS resin (B) contained is 10 to 250 parts by weight per 100 parts by weight of the PAS resin (A) because there is little decrease in mechanical properties such as impact resistance even when the percentage of use of the recycled material is increased. When the amount of the recycled PAS resin (B) contained is less than 10 parts by weight, the percentage of use of the recycled material is so low that the recycling of the material becomes less meaningful. When the amount of the recycled PAS resin (B) contained is more than 250 parts by weight, the resulting composition is inferior in impact resistance.

The amount of the recycled PAS resin (B) contained is preferably 15 to 245 parts by weight per 100 parts by weight of the PAS resin (A) in view of good balance between impact strength and fluidity. The amount of the recycled PAS resin (B) contained is particularly preferably 60 to 245 parts by weight so as to meet the meaning of recycling.

The fibrous filler (C) in the fibrous filler-reinforced recycled PAS resin composition of the present invention can be any filler that falls under the category of fibrous fillers. Examples of the fibrous filler (C) include: glass fibers; carbon fibers such as PAN-based carbon fibers and pitch-based carbon fibers; graphitized fibers; whiskers such as silicon nitride whiskers, basic magnesium sulfate whiskers, barium titanate whiskers, potassium titanate whiskers, silicon carbide whiskers, boron whiskers and zinc oxide whiskers; metal fibers such as stainless steel fibers; inorganic fibers such as rockwool, zirconia, alumina silica, barium titanate, silicon carbide, alumina, silica and blast furnace slag; organic fibers such as wholly-aromatic polyamide fibers, phenolic resin fibers and wholly-aromatic polyester fibers; and mineral fibers such as wollastonite and magnesium oxysulfate. Glass fibers are preferred to obtain the fibrous filler-reinforced recycled PAS resin composition with particularly excellent mechanical strength and impact resistance. The glass fiber may be any of those commonly referred to as glass fibers. Specific examples of the glass fibers include: glass fibers such as chopped strands having an average fiber diameter of 6 to 14 µm, chopped strands formed from flat glass fibers having a fiber cross-sectional aspect ratio of 2 to 4, milled fibers and rovings; silane fibers; aluminosilicate glass fibers; hollow glass fibers; non-hollow glass fibers; and the like. Among others, chopped strands having an average fiber diameter of 6 to 14 µm and/or chopped strands formed from flat glass fibers having a fiber cross-sectional aspect ratio of 2 to 4 are preferred to obtain the fibrous filler-reinforced recycled PAS resin composition with particularly excellent mechanical strength, impact resistance and fluidity. These fibrous fillers may be used in combination of two or more types thereof. The fibrous filler may be one previously surface-treated with a functional compound such as an epoxy compound, an isocyanate compound, a silane compound or a titanate compound, or a polymer, as required. With a view to obtaining the fibrous filler-reinforced recycled PAS resin composition with good balance between toughness, mechanical strength and fluidity, the amount of the fibrous filler (C) contained is 10 to 60 parts by weight per 100 parts by weight in total of the PAS resin (A) and the recycled PAS resin (B). When the amount of the fibrous filler contained is less than 10 parts by weight, the resulting composition is inferior in impact resistance. When the amount of the fibrous filler contained is more than 60 parts by weight, the resulting composition is inferior in fluidity.

The amount of the fibrous filler (C) contained is preferably 15 to 55 parts by weight per 100 parts by weight in total of the PAS resin (A) and the recycled PAS resin (B) with a view to obtaining the composition with excellent performance. The amount of the fibrous filler (C) contained is more preferably 20 to 50 parts by weight to achieve good balance between impact resistance and fluidity.

The fibrous filler-reinforced recycled PAS resin composition of the present invention preferably contains a non-fibrous filler (D) to achieve excellent dimensional accuracy and rigidity. Examples of the non-fibrous filler include calcium carbonate, lithium carbonate, magnesium carbonate, zinc carbonate, mica, silica, talc, clay, calcium sulfate, kaolin, wollastonite, zeolite, silicon oxide, magnesium oxide, zirconium oxide, tin oxide, magnesium silicate, calcium silicate, calcium phosphate, magnesium phosphate, hydrotalcite, glass powders, glass balloons and glass flakes. Calcium carbonate or glass flakes are preferred to obtain the fibrous filler-reinforced recycled PAS resin composition with particularly excellent dimensional accuracy and rigidity. To obtain the fibrous filler-reinforced recycled PAS resin composition with particularly excellent mechanical strength, impact resistance and fluidity, calcium carbonate or glass flakes having an average particle size of 2 to 800 µm is preferred. Here, the average particle size refers to a particle size (D50) at which the cumulative distribution percentage reaches 50% in a particle size distribution measured by a laser diffraction/scattering method. To achieve good balance between rigidity, dimensional accuracy and fluidity the amount of the non-fibrous filler (D) contained is preferably set such that the total amount of the fibrous filler (C) and the non-fibrous filler (D) is equivalent to 20 to 80 parts by weight per 100 parts by weight in total of the PAS resin (A) and the recycled PAS resin (B).

The fibrous filler-reinforced recycled PAS resin composition of the present invention preferably contains a thermoplastic elastomer (E) to achieve particularly excellent toughness. The thermoplastic elastomer (E) can be any of those commonly referred to as thermoplastic elastomers, and may be a thermoplastic elastomer having a reactive functional group, a thermoplastic elastomer having no reactive functional group, or a mixture of the thermoplastic elastomer having a reactive functional group and the thermoplastic elastomer having no reactive functional group.

The reactive functional group may, for example, be an epoxy group, a maleic anhydride group, a carboxylic acid group, an amino group, an isocyanate group or the like. Examples of the thermoplastic elastomer having a reactive group include: modified ethylene copolymers such as ethylene-α,β-unsaturated carboxylic acid alkyl ester-maleic anhydride copolymers, ethylene-α,β-unsaturated carboxylic acid glycidyl ester copolymers, ethylene-α,β-unsaturated carboxylic acid glycidyl ester-vinyl acetate copolymers, ethylene-α,β-unsaturated carboxylic acid glycidyl ester-α,β-unsaturated carboxylic acid alkyl ester copolymers and maleic anhydride-grafted ethylene-α-olefin copolymers; and hydrogenated forms of vinyl aromatic compound-based block copolymers, such as hydrogenated styrene-butadiene-styrene block copolymers modified with maleic anhydride or its derivative, hydrogenated styrene-butadiene block copolymers modified with maleic anhydride or its derivative, hydrogenated styrene-isoprene block copolymers modified with maleic anhydride or its derivative and hydrogenated styrene-isoprene-styrene block copolymers modified with maleic anhydride or its derivative. There can also be used polyurethane-based thermoplastic elastomers, polyester-based thermoplastic elastomers, polyamide-based thermoplastic elastomers, acrylonitrile-butadiene rubber-based thermoplastic elastomers, ethylene-propylene copolymers and ethylene-propylene-diene copolymers so far as they have functional groups reactable with PAS. Among others, a modified ethylene copolymer is preferred to obtain the fibrous filler-reinforced recycled PAS resin composition with particularly excellent toughness.

Examples of the thermoplastic elastomer having no reactive functional group include variations of the thermoplastic elastomers listed above with no functional groups. Among others, an olefin-acrylate binary copolymer is preferred to obtain the fibrous filler-reinforced recycled PAS resin composition with good balance between fluidity and toughness. In this binary copolymer, the olefin may be ethylene, an α-olefin of three or more carbon atoms or the like; and the acrylate may be methyl acrylate, ethyl acrylate, n-propyl acrylate, isopropyl acrylate, n-butyl acrylate, t-butyl acrylate, isobutyl acrylate or the like.

The amount of the thermoplastic elastomer (E) contained is preferably 1 to 20 parts by weight per 100 parts by weight in total of the PAS resin (A) and the recycled PAS resin (B) to obtain the fibrous filler-reinforced recycled PAS resin composition with good balance between toughness and fluidity.

Furthermore, the fibrous filler-reinforced recycled PAS resin composition of the present invention preferably contains a compatibilizer (F) to achieve particularly excellent mechanical strength and impact resistance. The compatibilizer may, for example, be an isocyanurate, an epoxy resin, a silane coupling agent or a mixture of two or more thereof.

The isocyanurate can be any of those commonly referred to as isocyanurates. Among others, an aliphatic isocyanurate is preferred to obtain the fibrous filler-reinforced recycled PAS resin composition with less likelihood of mold fouling. Specific examples of the aliphatic isocyanurate include 1,3,5-tris(6-isocyanatohex-1-yl)-1,3,5-triazine-2,4,6(1H,3H,5H)-trione, 1,3,5-tris(6-isocyanatotetr-1-yl)-1,3,5-triazine-2,4,6(1H,3H,5H)-trione, 1,3,5-tris(6-isocyanatododec-1-yl)-1,3,5-triazine-2,4,6-(1H,3H,5H)-trione, and the like. To obtain the fibrous filler-reinforced recycled PAS resin composition particularly less likely to cause mold fouling, preferred is an aliphatic isocyanurate having a molecular weight of 500 or more. The aliphatic isocyanurate may be a multimer such as dimer or trimer, or may be an isocyanurate composed of an aliphatic isocyanurate monomer with a multimer such as dimer or trimer included therein. An aliphatic isocyanurate containing 20% or more of isocyanate groups is preferred to ensure high reactivity with the PAS resin (A), the recycled PAS resin (B) and possibly the thermoplastic elastomer (E) and obtain the fibrous filler-reinforced recycled PAS resin composition with excellent impact resistance.

Further, the aliphatic isocyanurate may be partially modified with an alcohol such as 1,3-butanediol or 2,2,4-trimethyl-1,3-pentanediol. Of such aliphatic isocyanurates, 1,3,5-tris(6-isocyanatohex-1-yl)-1,3,5-triazine-2,4,6(1H,3H,5H)-trione is particularly preferred because of its excellent cold and heat resistance and availability. As specific examples of 1,3,5-tris(6-isocyanatohex-1-yl)-1,3,5-triazine-2,4,6(1H,3H,5H)-trione, there may be mentioned CORONATE HXR (trade name) (manufactured by TOSOH CORPORATION) and DURANATE TPA-100 (trade name) (manufactured by Asahi Kasei Corporation).

The epoxy resin can be any of those that fall under the category referred to as epoxy resins. Specific examples of the epoxy resin include epoxy resins containing glycidyl groups as typified by: glycidyl ether epoxy resins each synthesized from a compound having two or more hydroxyl groups in its molecule, such as 2,2-bis(4'-hydroxyphenyl)propane (bisphenol A), bis(2-hydroxyphenyl)methane (bisphenol F), 4,4'-dihydroxydiphenyl sulfone (bisphenol S), 4,4'-dihydroxybiphenyl, resorcin, saligenin, trihydroxydiphenyldimethylmethane, tetraphenylol ethane or a halogenated derivative or alkylated derivative thereof, butanediol, ethylene glycol, erythritol, a novolak, glycerin or a polyoxyalkylene, and epichlorohydrin etc.; glycidyl ester epoxy resins each synthesized from the compound having two or more hydroxyl groups in its molecule as described above and glycidyl phthalate etc.; and glycidyl amine epoxy resins each synthesized from a primary or secondary amine, such as aniline, diaminodiphenylmethane, meta-xylenediamine or 1,3-bisaminomethylcyclohexane, and epichlorohydrin etc., and epoxy resins containing no glycidyl groups as typified by epoxidized soybean oils, epoxidized polyolefins, vinylcyclohexene dioxide and dicyclopentadiene dioxide. Among others, a bisphenol epoxy resin such as a glycidyl ether epoxy resin or glycidyl ester epoxy resin of bisphenol e.g. bisphenol A, bisphenol F or bisphenol S is preferred to obtain the fibrous filler-reinforced recycled PAS resin composition with particularly excellent impact resistance. More preferred is a bisphenol A-type epoxy resin.

The silane coupling agent can be any of those that fall under the category referred to as silane coupling agents. To obtain the fibrous filler-reinforced recycled PAS resin composition with particularly excellent impact resistance and mechanical strength, the silane coupling agent is preferably a trialkoxysilane coupling agent having a glycidyl group and/or a trialkoxysilane coupling agent having an amino group. In this case, the silane coupling agent is not particularly limited so far as it is a trialkoxysilane coupling agent having a glycidyl group or amino group. Specific examples of the silane coupling agent falling under such a category include 3-glycidoxypropylmethyldimethoxysilane, 3-glycidoxypropyltrimethoxysilane, 3-glycidoxypropylmethyldiethoxysilane, 3-glycidoxypropyltriethoxysilane, 3-aminopropyltrimethoxysilane, 3-aminopropyltriethoxysilane, N-phenyl-3-aminopropyltrimethoxysilane, N-2-(aminoethyl)-3-aminopropylmethyldimethoxysilane and N-2-(aminoethyl)-3-aminopropyltrimethoxysilane.

The amount of the compatibilizer (F) contained is preferably 0.1 to 15 parts by weight per 100 parts by weight in total of the PAS resin (A) and the recycled PAS resin (B) to obtain the fibrous filler-reinforced recycled PAS resin composition with high impact resistance and mechanical strength and less mold fouling.

Further, the fibrous filler-reinforced recycled PAS resin composition of the present invention may contain a release agent (G) to enable production of formed articles with improved mold releasability and appearance. As the release agent (G), a polyethylene wax, a polypropylene wax or a fatty acid amide wax can suitably be used. The polyethylene wax and the polypropylene wax may be common commercially available products. The fatty acid amide wax is a polycondensate formed from a higher aliphatic monocarboxylic acid, a polybasic acid and a diamine, and can be any of those that fall under this category. For example, Light Amide WH-255 (trade name) (manufactured by Kyoeisha Chemical Co., Ltd.), which is a polycondensate formed from stearic acid, sebacic acid and ethylenediamine, may be mentioned.

The fibrous filler-reinforced recycled PAS resin composition of the present invention can be used with the addition of various additives within the range that does not depart from the scope of the present invention. For example, there may be added one or more of common additives including: plasticizers such as conventionally known polyalkylene oxide oligomer compounds, thioether compounds, ester compounds and organic phosphorus compounds; antioxidants; heat stabilizers; ultraviolet inhibitors; foaming agents; and pigments such as carbon black. Furthermore, one or more of various thermosetting resins; and thermoplastic resins, such as cyanate resins, phenolic resins, polyimides, silicone resins, polyesters, polyphenylene oxides, polycarbonates, polysulfones, polyether imides, polyether sulfones, polyether ketones, polyether ether ketones, polyamide imides and polyalkylene oxides, may be added.

As a method for producing the fibrous filler-reinforced recycled PAS resin composition of the present invention, a conventionally used hot melt-kneading process may be utilized. Examples of the hot melt-kneading process include those using a single- or twin-screw extruder, a kneader, a mill or a Brabender machine. Preferred is a hot melt-kneading process using a twin-screw extruder which is superior in kneading performance. The screws used in the twin-screw extruder preferably have two or more kneading zones. Furthermore, the screws preferably has a ratio (L1/D1) of screw length (L1) to screw diameter (D1) of 30 or greater, more preferably 40 or greater, to achieve sufficient mixing of the PAS resin (A) and the recycled PAS resin (B) and thereby obtain the fibrous filler-reinforced recycled PAS resin composition with excellent toughness such as impact resistance.

The cylinder temperature in the kneading zone of the extruder is preferably set to 280 to 330°C, more preferably 290 to 320°C, to achieve sufficient mixing of the PAS resin (A) and the recycled PAS resin (B) and easily suppress thermal decomposition of the recycled PAS resin (B). Further, the peripheral speed of the screw is preferably 50 to 400 mm/second, more preferably 150 to 300 mm/second, to achieve good mixing and uniformity between the PAS resin phase and the recycled PAS resin phase in the fibrous filler-reinforced recycled PAS resin composition and thereby obtaining the fibrous filler-reinforced recycled PAS resin composition with excellent toughness such as impact resistance. The dwell time of the molten resin composition in the extruder is preferably 30 to 100 seconds, more preferably 30 to 80 seconds, to ensure sufficient time for melt-kneading of the PAS resin (A) and the recycled PAS resin (B) and easily suppress thermal decomposition of the recycled PAS resin (B).

Then, the melt-kneaded fibrous filler-reinforced recycled PAS resin composition can be pelletized by, for example, hot-cutting or mist-cutting the extruded melt-kneaded composition or forming the melt-kneaded composition into a strand and cold-cutting the strand. To stably and efficiently produce pellets with excellent quality and color, it is preferable to produce pellets by cold-cutting i.e. cooling the melt-kneaded composition by e.g. water cooling or air cooling to form a strand and then cutting the strand into pellets, or by hot-cutting. The pellets preferably have a columnar shape with an average diameter of 0.5 to 2.5 mm and an average length of 1.5 to 4 mm or a spherical pellets with an average diameter of 1 to 3 mm, to achieve excellent processability of the pellets in production of various formed articles. In particular, the pellets preferably have a light brown color or a brown color to produce formed articles with excellent appearance.

The fibrous filler-reinforced recycled PAS resin composition of the present invention can be processed into a formed article of arbitrary shape by the use of an injection molding machine, an extrusion forming machine, a transfer molding machine, a compression molding machine, a blow forming machine or the like.

The fibrous filler-reinforced recycled PAS resin composition of the present invention contains a recycled PAS resin without affecting the inherent properties such as heat resistance, chemical resistance and fluidity of a PAS resin, and can suitably be used in electrical and electronic components, automotive parts, water area applications such as pipes and fittings, and the like.

### EXAMPLES

Now, the present invention will be described in further detail with reference to Examples. However, it should be understood that the present invention is by no means restricted to these examples.

Listed below are PAS resins (A), recycled PAS resins (B), fibrous fillers (C), non-fibrous filler (D), thermoelastic elastomers (E), compatibilizers (F) and release agents (E) used in Examples and Comparative Examples.

### <PAS resins (A)>

Poly(p-phenylene sulfide) (hereinafter referred to as PPS (A-1)): melt viscosity 2500 poises.
Poly(p-phenylene sulfide) (hereinafter referred to as PPS (A-2)): melt viscosity 350 poises.
Poly(p-phenylene sulfide) (hereinafter referred to as PPS (A-3)): melt viscosity 3220 poises.
Poly(p-phenylene sulfide) (hereinafter referred to as PPS (A-4)): melt viscosity 80 poises.
Amino-substituted poly(p-phenylene sulfide) (hereinafter referred to as PPS (A-5)): amino group content 0.1 mol%, melt viscosity 1200 poises.

### <Recycled PAS resins (B)>

Post-industrial recycled PPS resin (hereinafter referred to as PIRPPS resin (B-1)): crushed pieces of sprues and runners generated during injection molding of SUSTEEL GS-40 (trade name; glass fiber-reinforced material) manufactured by TOSOH CORPORATION.

Post-consumer recycled unreinforced PPS resin (hereinafter referred to as PCRPPS resin (B-2)): rPPS-B103 (trade name) manufactured by Ningbo Topcentral New Material Co., Ltd.

### <Fibrous fillers (C)>

Glass fiber (C-1): ECS03-630 (trade name) manufactured by Central Glass Fiber Co., Ltd.; average fiber diameter 9 µm, average fiber length 3 mm.
Glass fiber (C-2): ECS03-631K (trade name) manufactured by Central Glass Fiber Co., Ltd.; average fiber diameter 13 µm, average fiber length 3 mm.
Glass fiber (C-3): CSG 3PL-830S (trade name) manufactured by Nitto Boseki Co., Ltd.; aspect ratio 2.
Glass fiber (C-4): ECS03T-747-FGF (trade name) manufactured by Nippon Electric Glass Co., Ltd.; aspect ratio 4.
Glass fiber (C-5): T-760H (trade name) manufactured by Nippon Electric Glass Co., Ltd.; fiber diameter 10 µm, fiber length 3 mm.

### <Non-fibrous filler (D)>

Glass flake (D-1): REFG-312 (trade name) manufactured by Nippon Sheet Glass Co., Ltd.; average particle size 160 µm.

### <Thermoplastic elastomers (E)>

Ethylene-α,β-unsaturated carboxylic acid alkyl ester-maleic anhydride copolymer (E-1) (hereinafter simply referred to as modified ethylene copolymer (E-1)): BONDINE AX8390 (trade name) manufactured by Arkema Co., Ltd.

Ethylene-α,β-unsaturated carboxylic acid glycidyl ester-α,β-unsaturated carboxylic acid alkyl ester copolymer (E-2) (hereinafter simply referred to as thermoplastic elastomer (E-2)): LOTADER AX8700 (trade name) manufactured by SK Global Chemical Co., Ltd.; ethylene residue units:α,β-unsaturated carboxylic acid glycidyl ester residue units:α,β-unsaturated carboxylic acid alkyl ester residue units (ratio by weight) = 67:8:25.

### <Compatibilizers (F)>

Epoxy resin (F-1): EPICLON 3050PW (trade name) manufactured by DIC CORPORATION.

Glycidyl-containing trialkoxysilane coupling agent (F-2) (hereinafter referred to as compatibilizer (F-2)) KBM-403 (trade name); 3-glycidoxypropyltrimethoxysilane manufactured by Shin-Etsu Chemical Co., Ltd.

### <Release agents (G)>

Release agent (G-1): Purified Carnauba No. 1 Powder (trade name) manufactured by NIKKO RICA CORPORATION.

Release agent (G-2): Light Amide WH-255 (trade name) manufactured by Kyoeisha Chemical Co., Ltd.

### Synthesis Example 1

In a 50-liter autoclave equipped with a stirrer, 6865 g of sodium sulfide flakes (Na₂S·2.9H₂O), 164 g of 30% aqueous sodium hydroxide (30% NaOH aq) and 17000 g of N-methyl-2-pyrrolidone were put and gradually heated to 205°C with stirring under a nitrogen stream to distill away 1365 g of water. After cooling the system to 190°C., 7192 g of p-dichlorobenzene and 5000 g of N-methyl-2-pyrrolidone were added to the system. The system was then sealed under a nitrogen stream. The system was heated to 225°C over 2 hours and subjected to polymerization at 225°C for 2 hour. Subsequently, the system was heated to 250°C over 30 minutes and subjected to polymerization at 250°C for 3 hours. After the polymerization, N-methyl-2-pyrrolidone was recovered from the resulting polymerization slurry by distillation under reduced pressure. The final temperature reached was 170°C at which the pressure was 4.7 kPa. The resulting cake was washed by adding hot water at 80°C to a slurry concentration of 20%. By adding hot water in the same manner again and raising the temperature to 175°C, poly(p-phenylene sulfide) was washed. The washed poly(p-phenylene sulfide) was dried at 105°C for one whole day. The dried polyphenylene sulfide was put and heat-treated in a batch-type rotary kiln firing furnace by raising the temperature to 240°C under air atmosphere and keeping this state for 5 hours. There was thus obtained PPS (A-1) with a melt viscosity of 2500 poises.

### Synthesis Example 2

In a 15-liter autoclave equipped with a stirrer, 1814 g of sodium sulfide flakes (Na₂S·2.9H₂O), 8.7 g of granular sodium hydroxide (100% NaOH: Wako Special Grade) and 3232 g of N-methyl-2-pyrrolidone were put and gradually heated to 200°C with stirring under a nitrogen stream to distill away 339 g of water. After cooling the system to 190°C, 2129 g of p-dichlorobenzene and 1783 g of N-methyl-2-pyrrolidone were added to the system. The system was then sealed under a nitrogen stream. The system was heated to 225°C over 2 hours and subjected to polymerization at 225°C for 1 hour. Subsequently, the system was heated to 250°C over 25 minutes and subjected to polymerization at 250°C for 2 hours. Next, 509 g of distilled water was pressed into the system at 250°C, after which the system was heated to 255°C and further subjected to polymerization for 2 hours. After the completion of the polymerization, the system was cooled to room temperature, and the resulting polymerization slurry was separated into solid and liquid fractions by a centrifuge. The resulting cake was washed three times in sequence with N-methyl-2-pyrrolidone and acetone under a nitrogen stream, and further washed in sequence with 0.2% hydrochloric acid and hot water under a nitrogen stream. The thus-yielded poly(p-phenylene sulfide) was dried at 105°C for one whole day. Thus there was obtained PPS (A-2) with a melt viscosity of 350 poises.

### Synthesis Example 3

In a 50-liter autoclave equipped with a stirrer, 6214 g of Na₂S·2.9H₂O and 17000 g of N-methyl-2-pyrrolidone were put and gradually heated to 205°C with stirring under a nitrogen stream to distill away 1355 g of water. After cooling the system to 140°C, 7180 g of p-dichlorobenzene and 5000 g of N-methyl-2-pyrrolidone were added to the system. The system was then sealed under a nitrogen stream. The system was heated to 225°C over 2 hours and subjected to polymerization at 225°C for 2 hours. Subsequently, the system was heated to 250°C over 30 minutes and subjected to polymerization at 250°C for 3 hours. After the completion of the polymerization, the system was cooled to room temperature, and the resulting solid matter was isolated by a centrifuge. The solid matter was washed with hot water at 180°C and dried at 100°C for one whole day, thereby yielding poly(p-phenylene sulfide).

The thus-yielded poly(p-phenylene sulfide) was cured at 250°C for 6 hours under a nitrogen atmosphere to obtain a branched poly(p-phenylene sulfide) (referred to as PPS (A-3)). The melt viscosity of PPS (A-3) was 3220 poises.

### Synthesis Example 4

In a 15-liter autoclave equipped with a stirrer, 1814 g of Na₂S·2.9H₂O, 8.7 g of granular sodium hydroxide (100% NaOH: Wako Special Grade) and 3232g of N-methyl-2-pyrrolidone were put and gradually heated to 200°C with stirring under a nitrogen stream to distill away 339 g of water. After cooling the system to 190°C, 2085 g of p-dichlorobenzene and 1783 g of N-methyl-2-pyrrolidone were added to the system. The system was then sealed under a nitrogen stream. The system was heated to 225°C over 2 hours and subjected to polymerization at 225°C for 1 hour. Subsequently, the system was heated to 250°C over 25 minutes and subjected to polymerization at 250°C for 2 hours. After the completion of the polymerization, the system was cooled to room temperature, and the resulting solid matter was isolated by a centrifuge. The solid matter was washed with hot water at 180°C and dried at 105°C for one whole day, thereby yielding poly(p-phenylene sulfide).

The thus-yielded poly(p-phenylene sulfide) was dried at 240°C for 6 hours under reduced pressure by a vacuum dryer to obtain a linear poly(p-phenylene sulfide) (referred to as PPS (A-4)). The melt viscosity of PPS (A-4) was 80 poises.

### Synthesis Example 5

In a 50-liter autoclave equipped with a stirrer, 6214 g of sodium sulfide flakes (Na₂S·2.9H₂O) and 17000 g of N-methyl-2-pyrrolidone was put and gradually heated to 205°C with stirring under a nitrogen stream to distill away 1355 g of water. After the system was cooled to 140°C, 7278 g of p-dichlorobenzene, 11.7 g of 3,5-dichloroaniline and 5000 g of N-methyl-2-pyrrolidone were added to the system. The system was then sealed under a nitrogen stream. The system was heated to 225°C over 2 hours and subjected to polymerization at 225°C for 2 hours. Subsequently, the system was heated to 250°C over 30 minutes and subjected to polymerization at 250°C for 3 hours. After the completion of the polymerization, the system was cooled to room temperature, and the resulting polymer was isolated by a centrifuge. The isolated solid polymer was repeatedly washed with hot water and dried at 100°C for one whole day, thereby yielding an amino-substituted poly(p-phenylene sulfide) with a melt viscosity of 400 poises. The dried amino-substituted poly(p-phenylene sulfide) was put in a batch-type rotary kiln firing furnace and cured at 240°C for 2 hours under a nitrogen atmosphere. There was thus obtained PPS (A-5) with a melt viscosity of 1200 poises and an amino group content of 0.1 mol% relative to phenyl groups.

The evaluation and measurement methods of the obtained PAS resin compositions are indicated below.

### [Measurement of melt viscosity of PAS resin]

The melt viscosity was measured under the conditions of a measurement temperature of 315°C and a load of 10 kg by a capillary rheometer flow tester equipped with a die of 1 mm in diameter and 2 mm in length (CFT-500 (trade name) manufactured by Shimadzu Corporation).

### [Measurement of Charpy (notched) impact strength]

A test specimen was prepared by an injection molding machine (SE-75S (trade name) manufactured by Sumitomo Heavy Industries, Ltd.) and measured for its impact strength in accordance with ISO 179-1. The impact resistance was rated as excellent when the Charpy impact strength was 6 kJ/m² or higher.

### [Measurement of fluidity]

A mold with a spiral groove of 1 mm in depth and 10 mm in width was mounted to an injection molding machine (SE-75S (trade name) manufactured by Sumitomo Heavy Industries, Ltd.). A PAS resin composition was charged into a hopper of the injection molding machine and injected into the mold with the cylinder temperature set to 310°C, the injection pressure set to 190 MPa, the injection speed set to the maximum, the injection time set to 1.5 seconds and the mold temperature set to 135°C. The length by which the melt of the resin composition flowed in the spiral groove of the mold was measured as a barflow length (hereinafter referred to as BFL), based on which the molding fluidity was evaluated. The molding fluidity was rated as excellent when the measured length was 150 mm or more.

### Example 1

With 100 parts by weight of PPS (A-1) obtained in Synthesis Example 1, 18 parts by weight of the PIRPPS resin (B-1) was uniformly mixed in advance. The resulting mixed material was charged into a hopper of a twin-screw extruder with four kneading zones (TEX-25αIII (trade name) manufactured by Japan Steel Works, Ltd.; L1/D1 = 55).

On the other hand, the glass fiber (C-1) and the release agent (G-1) were charged into a hopper of the side feeder of the twin-screw extruder such that the amounts of the glass fiber and the release agent charged per 100 parts by weight of the PPS resin (A-1) were 61 parts by weight (equivalent to 52 parts by weight per 100 parts by weight in total of the PPS resin (A-1) and the PIRPPS resin (B-1)) and 2 parts by weight, respectively.

The charged materials were melt-kneaded together at a raw material feeding speed of 25 kg/hr and a screw rotation speed of 200 rpm (peripheral speed: 258 mm/second) under the condition that the cylinder temperature in the kneading zones was heated to 300°C. The melt of the fibrous filler-reinforced recycled PAS resin composition flowing out from the die after a dwell time of 50 seconds was cooled with water to form a strand. The strand was cut into columnar pellets with a diameter of 0.5 to 2.5 mm (average diameter 1.7 mm) and a length of 1.5 to 4 mm (average length 2.5 mm). In this way, the fibrous filler-reinforced recycled PAS resin composition was obtained.

The molding flow length of the fibrous filler-reinforced recycled PAS resin composition was measured by charging the fibrous filler-reinforced recycled PAS resin composition into an injection molding machine (SE-75S (trade name) manufactured by Sumitomo Heavy Industries, Ltd.) while heating the injection molding machine to a cylinder temperature of 300°C and a mold temperature of 140°C. Furthermore, the evaluation of the Charpy impact strength was performed using a test specimen injection-molded from the resin composition. The respective measurement and evaluation results are shown in Table 1.

### Examples 2 to 8

Pellet-shaped fibrous filler-reinforced recycled PAS resin compositions were obtained in the same manner as in Example 1, except that the mixing ratios of the PAS resin (A-1, A-2), the PIRPPS resin (B-1), the glass fiber (C-1 to C-4), the glass flake (D-1), the modified ethylene copolymer (E-1), the epoxy resin (F-1) and the release agent (G-1, G-2) were set as shown in Table 1. The obtained fibrous filler-reinforced recycled PAS resin compositions were evaluated in the same manner as in Example 1. The evaluation results are shown in Table 1.

All of the obtained fibrous filler-reinforced recycled PAS resin compositions were excellent in impact resistance and fluidity.

**Table 1**

| | | | Unit | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|
| Formula | Polyarylene sulfide (A) | | Parts by weight | | | | | | | | |
| | | PPS (A-1) | | 100 | 100 | 100 | | | | | |
| | | PPS (A-2) | | | | | 100 | 100 | 100 | 100 | 100 |
| | Recycled polyarylene sulfide (B) | | | | | | | | | | |
| | | PIRPPS resin (B-1) | | 18 | 67 | 143 | 23 | 92 | 221 | 221 | 221 |
| | Fibrous filler (C) | | | | | | | | | | |
| | | Glass fiber (C-1) | | 61 | 53 | 39 | | | | | |
| | | Glass fiber (C-2) | | | | | 53 | 54 | 55 | | |
| | | Glass fiber (C-3) | | | | | | | | 55 | |
| | | Glass fiber (C-4) | | | | | | | | | 55 |
| | Non-fibrous filler (D) | | | | | | | | | | |
| | | Glass flake (D-1) | | | | | 41 | 38 | 33 | 33 | 33 |
| | Thermoplastic elastomer (E) | | | | | | | | | | |
| | | Modified ethylene copolymer (E-1) | | | | | 12 | 15 | 22 | 22 | 22 |
| | Compatibilizer (F) | | | | | | | | | | |
| | | Epoxy resin (F-1) | | | | | 2 | 3 | 4 | 4 | 4 |
| | Release agent (G) | | | | | | | | | | |
| | | Release agent (G-1) | | 2 | 3 | 4 | | | | | |
| | | Release agent (G-2) | | | | | 3 | 4 | 6 | 6 | 6 |
| | (B)/(A)×100 | | | 18 | 67 | 143 | 23 | 92 | 221 | 221 | 221 |
| | (C)/((A)+(B))×100 | | | 52 | 32 | 16 | 43 | 28 | 17 | 17 | 17 |
| | ((C)+(D))/((A)+(B))×100 | | | - | - | - | 76 | 48 | 28 | 27 | 27 |
| | (E)/((A)+(B))×100 | | | - | - | - | 10 | 8 | 7 | 7 | 7 |
| | (F)/((A)+(B))×100 | | | - | - | - | 2 | 2 | 1 | 1 | 1 |
| Evaluations | Charpy impact strength | | KJ/m2 | 8.4 | 7.3 | 6.5 | 7.8 | 7.5 | 7.3 | 8.0 | 8.2 |
| | BFL | | mm | 219 | 223 | 228 | 155 | 180 | 200 | 218 | 222 |
| | Average pellet diameter | | mm | 1.7 | 2.0 | 2.2 | 0.8 | 1.0 | 1.0 | 1.1 | 1.0 |
| | Average pellet length | | mm | 2.5 | 2.8 | 3.2 | 1.6 | 1.8 | 2.2 | 2.4 | 2.3 |

### Comparative Examples 1 to 5

Pellet-shaped resin compositions were obtained in the same manner as in Example 1, except that the mixing ratios of the PPS resin (A-1, A-2, A-3, A-4), the PIRPPS resin (B-1), the glass fiber (C-1, C-2), the glass flake (D-1), the modified ethylene copolymer (E-1), the epoxy resin (F-1) and the release agent (G-1, G-2) were set as shown in Table 2. The obtained resin compositions were evaluated in the same manner as in Example 1. The evaluation results are shown in Table 2.

The resin compositions of Comparative Examples 2, 3 and 5 were inferior in impact resistance. The resin compositions of Comparative Examples 1 and 4 were inferior in fluidity.

**Table 2**

| | | | Unit | Comp. Ex. 1 | Comp. Ex. 2 | Comp. Ex. 3 | Comp. Ex. 4 | Comp. Ex. 5 |
|---|---|---|---|---|---|---|---|---|
| Formula | Polyarylene sulfide (A) | | Parts by weight | | | | | |
| | | PPS (A-1) | | | | 100 | 100 | |
| | | PPS (A-2) | | | | | | 100 |
| | | PPS (A-3) | | 100 | | | | |
| | | PPS (A-4) | | | 100 | | | |
| | Recycled polyarylene sulfide (B) | | | | | | | |
| | | PIRPPS resin (B-1) | | 143 | 143 | 47 | 120 | 341 |
| | Fibrous filler (C) | | | | | | | |
| | | Glass fiber (C-1) | | 39 | 39 | 8 | 175 | |
| | | Glass fiber (C-2) | | | | | | 57 |
| | Non-fibrous filler (D) | | | | | | | |
| | | Glass flake (D-1) | | | | | | 28 |
| | Thermoplastic elastomer (E) | | | | | | | |
| | | Modified ethylene copolymer (E-1) | | | | | | 28 |
| | Compatibilizer (F) | | | | | | | |
| | | Epoxy resin (F-1) | | | | | | 6 |
| | Release agent (G) | | | | | | | |
| | | Release agent (G-1) | | 4 | 4 | 2 | 5 | |
| | | Release agent (G-2) | | | | | | 8 |
| | (B)/(A)×100 | | | 143 | 143 | 47 | 120 | 341 |
| | (C)/((A)+(B))×100 | | | 16 | 16 | 5 | 80 | 13 |
| | ((C)+(D))/((A)+(B))×100 | | | - | - | - | - | 6 |
| | (E)/((A)+(B))× 100 | | | - | - | - | - | 6 |
| | (F)/((A)+(B))×100 | | | - | - | - | - | 1 |
| Evaluations | Charpy impact strength | | KJ/m2 | 9.0 | 5.2 | 4.5 | 8.5 | 5.8 |
| | BFL | | mm | 140 | 260 | 245 | 145 | 210 |

### Example 9

With 100 parts by weight of PPS (A-5) obtained in Synthesis Example 5, 19 parts by weight of the PCRPPS resin (B-2) was uniformly mixed in advance. The resulting mixed material was charged into a hopper of a twin-screw extruder with four kneading zones (TEX-25αIII (trade name) manufactured by Japan Steel Works, Ltd.; L1/D1 = 55). On the other hand, the glass fiber (C-5), the thermoplastic elastomer (E-2), the compatibilizer (F-2) and the release agent (G-2) were charged into a hopper of the side feeder of the twin-screw extruder such that the amounts of the glass fiber, the thermoplastic elastomer, the compatibilizer and the release agent charged per 100 parts by weight of the PPS resin (A-5) were 56 parts by weight (equivalent to 47 parts by weight per 100 parts by weight in total of the PPS resin (A-5) and the PCRPPS resin (B-2)), 9 parts by weight, 0.3 parts by weight and 3 parts by weight, respectively. The charged materials were melt-kneaded at a raw material feeding speed of 25 kg/hr and a screw rotation speed of 200 rpm (peripheral speed: 258 mm/second) under the condition that the cylinder temperature in the kneading zones was heated to 300°C. The melt of the fibrous filler-reinforced recycled PAS resin composition flowing out of the die after a dwell time of 50 seconds was cooled with water to form a strand. The strand was cut into columnar pellets with an average diameter of 0.7 mm and an average length of 2.1 mm. In this way, the fibrous filler-reinforced recycled PAS resin composition was obtained.

The BFL as the molding flow length of the fibrous filler-reinforced recycled PAS resin composition was measured by charging the fibrous filler-reinforced recycled PAS resin composition into an injection molding machine (SE-75S (trade name) manufactured by Sumitomo Heavy Industries, Ltd.) while heating the injection molding machine to a cylinder temperature of 300°C and a mold temperature of 140°C. Furthermore, the evaluation of the Charpy impact strength was performed using a test specimen injection-molded from the resin composition. The respective measurement and evaluation results are shown in Table 3.

### Examples 10 to 13

Pellet-shaped fibrous filler-reinforced recycled PAS resin compositions were obtained in the same manner as in Example 9, except that the mixing ratios of the PAS resin (A-5), the PCRPPS resin (B-2), the glass fiber (C-3 to C-5), the thermoplastic elastomer (E-2), the compatibilizer (F-2) and the release agent (G-2) were set as shown in Table 3. The obtained fibrous filler-reinforced recycled PAS resin compositions were evaluated in the same manner as in Example 9. The evaluation results are shown in Table 3.

All of the obtained fibrous filler-reinforced recycled PAS resin compositions were excellent in impact resistance and fluidity.

**Table 3**

| | | | Unit | Ex. 9 | Ex. 10 | Ex. 11 | Ex. 12 | Ex. 13 |
|---|---|---|---|---|---|---|---|---|
| Formula | Polyarylene sulfide (A) | | Parts by weight | | | | | |
| | | PPS (A-5) | | 100 | 100 | 100 | 100 | 100 |
| | Recycled polyarylene sulfide (B) | | | | | | | |
| | | PIRPPS resin (B-2) | | 19 | 90 | 244 | 244 | 244 |
| | Fibrous filler (C) | | | | | | | |
| | | Glass fiber (C-1) | | | | | | |
| | | Glass fiber (C-5) | | 56 | 90 | 163 | | |
| | | Glass fiber (C-3) | | | | | 163 | |
| | | Glass fiber (C-4) | | | | | | 163 |
| | Thermoplastic elastomer (E) | | | | | | | |
| | | Modified ethylene copolymer (E-2) | | 9 | 15 | 27 | 27 | 27 |
| | Compatibilizer (F) | | | | | | | |
| | | Epoxy resin (F-2) | | 0.3 | 0.4 | 0.8 | 0.8 | 0.8 |
| | Release agent (G) | | | | | | | |
| | | Release agent (G-2) | | 3 | 4 | 8 | 8 | 8 |
| | (B)/(A)×100 | | | 19 | 90 | 244 | 244 | 244 |
| | (C)/((A)+(B))×100 | | | 47 | 47 | 47 | 47 | 47 |
| | (E)/((A)+(B))×100 | | | 8 | 8 | 8 | 8 | 8 |
| | (F)/((A)+(B))×100 | | | 0.3 | 0.2 | 0.2 | 0.2 | 0.2 |
| Evaluations | Charpy impact strength | | KJ/m2 | 12.6 | 11.6 | 9.7 | 10.7 | 11.0 |
| | BFL | | mm | 150 | 150 | 154 | 168 | 186 |
| | Average pellet diameter | | mm | 0.7 | 1.2 | 1.5 | 1.6 | 1.5 |
| | Average pellet length | | mm | 2.1 | 2.7 | 3.0 | 2.8 | 2.8 |

### Comparative Examples 6 to 9

Pellet-shaped resin compositions were obtained in the same manner as in Example 9, except that the mixing ratios of the PPS resin (A-1, A-3, A-4), the PCRPPS resin (B-2) and the glass fiber (C-1) were set as shown in Table 4. The obtained resin compositions were evaluated in the same manner as in Example 1. The evaluation results are shown in Table 4.

The resin compositions of Comparative Examples 6 to 9 were inferior in fluidity.

**Table 4**

| | | | Unit | Comp. Ex. 6 | Comp. Ex. 7 | Comp. Ex. 8 | Comp. Ex. 9 |
|---|---|---|---|---|---|---|---|
| Formula | Polyarylene sulfide (A) | | Parts by weight | | | | |
| | | PPS (A-1) | | | | 100 | 100 |
| | | PPS (A-3) | | 100 | | | |
| | | PPS (A-4) | | | 100 | | |
| | Recycled polyarylene sulfide (B) | | | | | | |
| | | PIRPPS resin (B-2) | | 100 | 100 | 301 | 100 |
| | Fibrous filler (C) | | | | | | |
| | | Glass fiber (C-1) | | 129 | 129 | 260 | 152 |
| | Release agent (G) | | | | | | |
| | | Release agent (G-1) | | 4 | 4 | 9 | 5 |
| | (B)/(A)×100 | | | 100 | 100 | 301 | 100 |
| | (C)/((A)+(B))×100 | | | 65 | 65 | 65 | 76 |
| Evaluations | Charpy impact strength | | KJ/m2 | 12.0 | 7.0 | 9.0 | 10.5 |
| | BFL | | mm | 76 | 143 | 96 | 108 |

The entire disclosure of Japanese Patent Application No. 2022-192698 filed on December 1, 2022 including claims, specification and summary is incorporated herein by reference in its entirety.

### INDUSTRIAL APPLICABILITY

The fibrous filler-reinforced recycled PAS resin composition of the present invention contains a recycled PAS resin without affecting the inherent properties such as mechanical properties and fluidity of a PAS resin, and is particularly useful for electrical and electronic components, automotive parts, water area applications such as pipes and fittings, and the like.

## Claims

1. A fibrous filler-reinforced recycled polyarylene sulfide resin composition comprising a polyarylene sulfide resin (A), a recycled polyarylene sulfide resin (B) and a fibrous filler (C),
the polyarylene sulfide resin (A) having a melt viscosity of 100 to 3000 poises as measured under conditions of a measurement temperature of 315°C and a load of 10 kg by a capillary rheometer flow tester equipped with a die of 1 mm in diameter and 2 mm in length,
the amount of the recycled polyarylene sulfide resin (B) contained being 10 to 250 parts by weight per 100 parts by weight of the polyarylene sulfide resin (A), and
the amount of the fibrous filler (C) contained being 10 to 60 parts by weight per 100 parts by weight in total of the polyarylene sulfide resin (A) and the recycled polyarylene sulfide resin (B).

2. The fibrous filler-reinforced recycled polyarylene sulfide resin composition according to Claim 1, wherein the recycled polyarylene sulfide resin (B) is a post-consumer recycled polyarylene sulfide resin and/or a post-industrial recycled polyarylene sulfide resin.

3. The fibrous filler-reinforced recycled polyarylene sulfide resin composition according to Claim 1 or 2, wherein the recycled polyarylene sulfide resin (B) is an unreinforced recycled polyarylene sulfide resin.

4. The fibrous filler-reinforced recycled polyarylene sulfide resin composition according to any one of Claims 1 to 3, wherein the recycled polyarylene sulfide resin (B) is an unreinforced recycled polyarylene sulfide resin recycled from at least one type selected from the group consisting of polyarylene sulfide resin fibers, polyarylene sulfide resin sheets and polyarylene sulfide resin films.

5. The fibrous filler-reinforced recycled polyarylene sulfide resin composition according to any one of Claims 1 to 4, wherein the fibrous filler is in the form of chopped strands having an average fiber diameter of 6 to 14 µm and/or chopped strands formed from flat glass fibers having a fiber cross-sectional aspect ratio of 2 to 4.

6. The fibrous filler-reinforced recycled polyarylene sulfide resin composition according to any one of Claims 1 to 5, further comprising a non-fibrous filler (D).

7. The fibrous filler-reinforced recycled polyarylene sulfide resin composition according to any one of Claims 1 to 6, further comprising a thermoplastic elastomer (E), a compatibilizer (F) and/or a release agent (G).

8. A pellet formed from the fibrous filler-reinforced recycled polyarylene sulfide resin composition according to any one of Claims 1 to 7, wherein the pellet has a columnar shape with a diameter of 0.5 to 2.5 mm and a length of 1.5 to 4 mm or a spherical shape with a diameter of 1 to 3 mm.

9. A method for producing a fibrous filler-reinforced recycled polyarylene sulfide resin composition, comprising melt-kneading in and extruding from, a twin-screw extruder having screws with a ratio (L1/D1) of screw length (L1) to screw diameter (D1) of 30 or greater and two or more kneading zones, a polyarylene sulfide resin (A), a recycled polyarylene sulfide resin (B) and a fibrous filler (C) under kneading conditions of a kneading-zone cylinder temperature of 280 to 330°C, a screw circumferential speed of 50 to 400 mm/second and a dwell time of 30 to 100 seconds, the polyarylene sulfide resin (A) having a melt viscosity of 100 to 3000 poises as measured under conditions of a measurement temperature of 315°C and a load of 10 kg by a capillary rheometer flow tester equipped with a die of 1 mm in diameter and 2 mm in length.
